# EUROPÄISCHE PATENTSCHRIFT

(11) **EP 1 469 250 B1**
(45) Veröffentlichungstag und Bekanntmachung des Hinweises auf die Patenterteilung: **07.12.2005**
(21) Anmeldenummer: 04006407.3
(22) Anmeldetag: 17.03.2004
(51) Int. Cl.: F16M 11/06

(54) **Medizinische Deckenversorgungseinheit mit einer Sicherungsvorrichtung für eine vertikale Drehverbindung**
Medical ceiling support with a safety device for a vertical rotary connection
Support médical pour plafond avec un dispositif de sécurité pour une liaison rotative verticale

(30) Priorität: 14.04.2003 DE 10317161
(43) Veröffentlichungstag der Anmeldung: 20.10.2004
(73) Patentinhaber: Röder, Heinrich, 85737 Ismaning (DE)
(72) Erfinder: Röder, Heinrich, 85737 Ismaning (DE); Maier, Franz, 85441 Hohenkammer (DE); Grill, Max, 82284 Grafrath (DE)
(74) Vertreter: Hofer, Dorothea

(56) Entgegenhaltungen:
- DE-A- 10 002 974
- DE-A- 19 732 212
- DE-U- 20 021 708
- US-A- 5 490 652
- US-A1- 2003 175 113

## Beschreibung

Die vorliegende Erfindung bezieht sich auf eine Sicherungsvorrichtung für eine vertikale Verbindung zweier Bauteile, nämlich für eine Drehverbindung von medizinischen Deckenversorgungseinheiten, insbesondere von medizinischen Deckenstativen aufweist.

Medizinische Deckenstative dienen zur hängenden Aufnahme von medizinischen Geräten wie beispielsweise Überwachungsmonitoren, Beatmungssystemen, Spritzenpumpen etc. Sie werden beispielsweise in Operationssälen oder Intensivräumen etc. für die Unterbringung der für Operationen, die Intensivpflege bzw. Untersuchung eines Patienten notwendigen Systeme verwendet. Da die gesamten Versorgungsleitungen für Strom, Druckluft, Sauerstoff und andere medizinische Gase, etc. aus der Decke in den Deckenstative verlegt und dort direkt an die Geräte augeschlossen werden können, wird verhindert, daß Kabel am Boden verlegt werden müssen und das Risiko über die am Boden liegenden Kabel zu stolpern kann dadurch ausgeschaltet werden.

Deckenstative bestehen aus einer Säule und mindestens einem horizontalen schwenkbaren Arm, die über eine Drehverbindung drehbar an der Decke befestigt sind, und einem Geräteträger, auch Stativkopf genannt, in dem die notwendigen Anschlüsse und Geräte untergebracht sind. Durch den drehbar gelagerten Arm läßt sich das Deckenstativ in einem gewünschten Radius beliebig verschwenken, wodurch der Zugang zum Patienten erleichtert wird oder eine optimale Arbeitsposition eingestellt werden kann. Aus der Decke werden alle Kabel und Versorgungsleitungen nach unten in das Deckenstativ verlegt und dort durch die Drehverbindung und den Arm zum Stativkopf geleitet. Das Deckenstativ kann auch zwei Arme aufweisen, die drehbar miteinander gekoppelt sind.

Die Drehverbindungen müssen das gesamte Gewicht des Deckenstativs samt Stativkopf und den darin befindlichen Geräten tragen. Ein Auseinanderreißen der Drehverbindung muß unbedingt vermieden werden, da sonst das Deckenstativ herabfallen würde und erheblicher Personen- und Sachschaden entstehen könnte.

Aus der DE 100 02 974 ist eine Flanschverbindung für eine vertikale Verbindung zweier Rohre bekannt. Ziel ist es, zwei Rohre dichtend miteinander zu verbinden, ohne dabei zu große Anforderungen an die Formgenauigkeit der Rohrenden zu stellen. Dies geschieht durch eine Rohrkupplung, die aus zwei Flanschinnenringen besteht, die radial an der Außenumfangsseite der Rohrenden angeschweißt sind. Diese beiden Flanschinnenringe werden über einen zweiteiligen Verbindungsring miteinander gekoppelt, wobei der Verbindungsring in axialer Richtung zwei radial nach innen weisende Vorsprünge aufweist, die die Flanschinnenringe radial umfassen. Eine Abdichtung wird erreicht, indem in einem dafür vorgesehenen Zwischenraum in den Flanschinnenringen Dichtringe eingebracht werden, die elastisch gepreßt werden, um so eventuelle Formtoleranzen an den Rohrmaßen auszugleichen.

Es ist demnach Aufgabe der vorliegenden Erfindung, eine medizinische Deckenversorgungseinheit mit einer Sicherungsvorrichtung einer vertikalen Drebverbindung bereit zu stellen, die ein Herabfallen des Deckenstativs sicher verhindert. Darüber hinaus soll die Sicherungsvorrichtung auch an bereits bestehenden Systemen ohne großen Aufwand nachrüstbar sein.

Diese Aufgabe wird mit einer medizimischen Deckenversorgungseinheit nach Anspruch 1 gelöst. Weitere vorteilhafte Weiterbildungen sind Gegenstand der Unteransprüche.

Durch das Ausbilden der Schale in einzelne Schalensegmente und der Ringscheibe in einzelne Ringscheibensegmente ist auch ein nachträglicher Einbau der Sicherungsvorrichtung möglich, ohne daß die Kabel und Versorgungsleitungen aufgetrennt werden müssen. Im Falle einer Nachrüstung werden einfach zunächst die Ringscheibensegmente jeweils oberhalb und unterhalb der Drehverbindung von der Seite her eingeschoben und über Befestigungsschrauben der Drehverbindung fixiert.

Vorteilhafterweise besteht der Eingriffsabschnitt des Schalensegments aus einem im wesentlichen rechtwinklig vom oberen oder unteren Rand abgewinkelten Ringsegmentabschnitt. Dadurch kann jedes Schalensegment wie eine Klammer seitlich auf die Drehverbindung gesteckt werden, wobei der obere und der untere Ringsegmentabschnitt einfach über bzw. unter die Ringscheibe greifen und die Drehverbindung gegen Auseinanderfallen sichern.

Die Ausbildung des Eingriffsabschnitts des Ringscheibensegments als ein an dessen Außenumfang vorstehender abgestufter Vorsprung sorgt für eine einfache Montage der Schalensegmente. Ferner ist die Herstellung solcher Ringscheibensegmente einfach und kostengünstig.

Indem sich der Eingriffsabschnitt des Schalensegments und der Eingriffsabschnitt des Ringscheibensegments über den gesamten Umfang erstrecken, wird die aufzunehmende Kraft im Falle des Auseinanderreißens der Drehverbindung auf eine maximale Fläche verteilt, so daß die Wandstärke der Eingriffsabschnitte gering gehalten werden kann. Dadurch kann die Sicherungsvorrichtung unauffällig gestaltet werden.

Im nachfolgenden wird die Erfindung anhand einer derzeit bevorzugten Ausführungsform unter Bezugnahme auf die beigefügten Zeichnungen näher erläutert.

Fig. 1 ist eine teilweise ausgebrochene Seitenansicht einer Drehverbindung und zweier Arme.

Fig. 2 ist eine perspektivische Darstellung eines Schalensegmentes.

Fig. 3 ist eine Draufsicht zweier zu einem Ring zusammengefügter Schalensegmente.

Fig. 4 ist eine Draufsicht zweier zu einem Ring zusammengefügter Ringscheibensegmente.

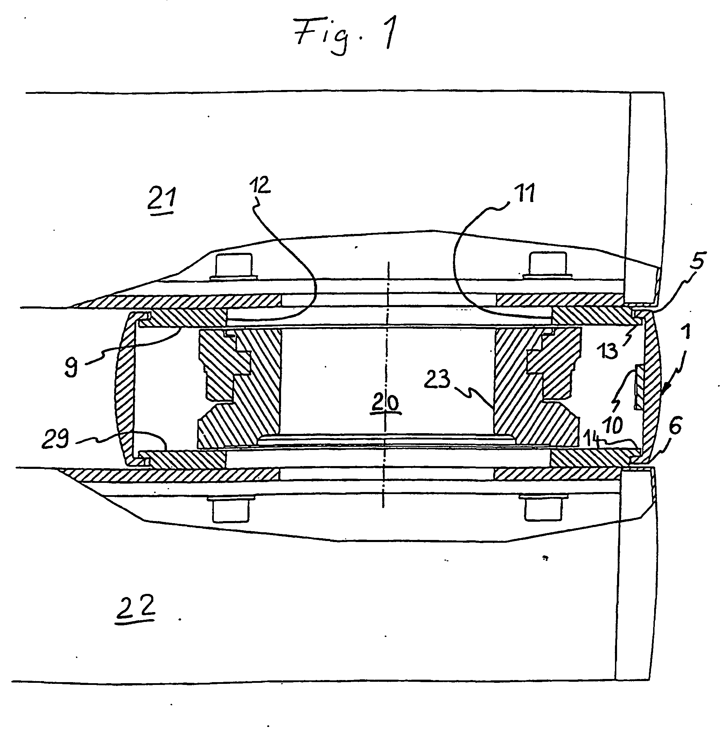

In Fig. 1 ist ein horizontal verlaufender oberer Arm 21 und ein horizontal verlaufender unterer Arm 22 angedeutet, die über eine vertikale Drehverbindung 20 drehbar miteinander verbunden sind. Die Drehverbindung 20 weist eine Nabe 23 auf, die von zwei weiteren nicht näher bezeichneten zylindrischen Bauteilen umgeben ist. Die Nabe 23 ist als Hohlzylinder ausgebildet. In dem Hohlzylinder sind die (hier nicht gezeigten) Versorgungskabel und -schläuche verlegt. Auf die Drehverbindung 20 an sich soll im weiteren allerdings nicht näher eingegangen werden.

Die Sicherungsvorrichtung für die Drehverbindung 20 wird in der vorliegenden Ausführungsform durch zwei die Drehverbindung umhüllende Schalensegmente 1 und dazugehörige obere und untere ebenfalls um die Drehverbindung herum angeordnete Ringscheiben 9 und 29 gebildet.

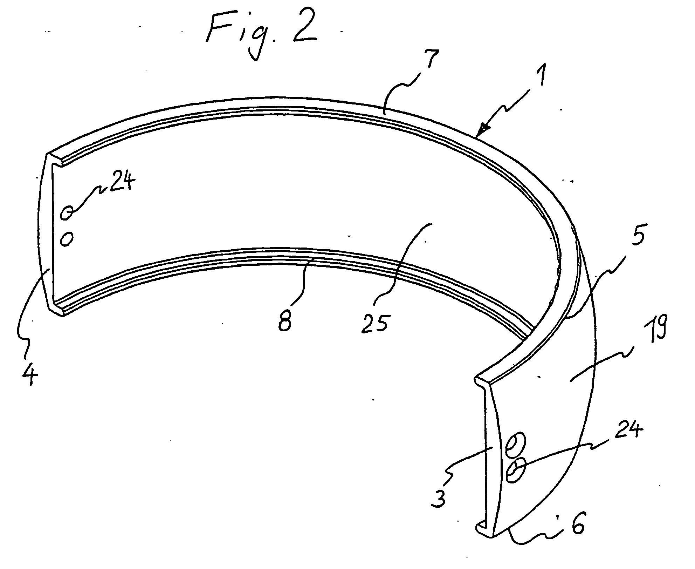

In Fig. 2 ist ein Schalensegment 1 abgebildet. Da das zweite Schalensegment identisch aufgebaut ist, wird es hier nicht näher beschrieben. Das Schalensegment 1 ist von oben betrachtet halbkreisförmig ausgebildet. Es besitzt eine Schalensegmentfläche 19, die in Umfangsrichtung ein erstes freies Segmentende 3 und einem dem ersten Segmentende diametral gegenüberliegendes zweites freies Segmentende 4 aufweist. Im eingebauten Zustand, wie er in Fig. 1 gezeigt ist, weist das Schalensegment einen dem oberen Arm 21 zugewandten oberen Rand 5 auf, sowie einen gegenüberliegenden, dem unteren Arm 22 zugewandten unteren Rand 6. An den oberen Rand 5 schließt sich rechtwinklig ein oberer Vorsprung an. Dieser erstreckt sich entlang des gesamten oberen Randes 5 radial nach innen, wodurch er einen durchgehenden Eingriffsabschnitt 7 bildet. In gleicher Weise schließt sich am unteren Rand 6 ebenfalls rechtwinklig ein radial nach innen gerichteter einen Eingriffsabschnitt 8 bildender Vorsprung an. Dieser radiale Vorsprung ragt nur wenige Millimeter nach innen. Die Abmessung des Vorsprungs ist jedoch so dimensioniert, daß er durch Eingreifen in Ringscheibensegmente, die nachfolgend erläutert werden, das Gewicht des Deckenstativs und der Geräte sicher halten könnte, falls die Drehverbindung 20 auseinanderreißen sollte. Im Bereich des Segmentendes 3 sind in der Schalensegmentfläche 19 jeweils zwei Bohrungen 24 vorgesehen, durch die Schrauben gesteckt werden können. Auch am anderen Segmentende 4 sind zwei Bohrungen 24 vorgesehen.

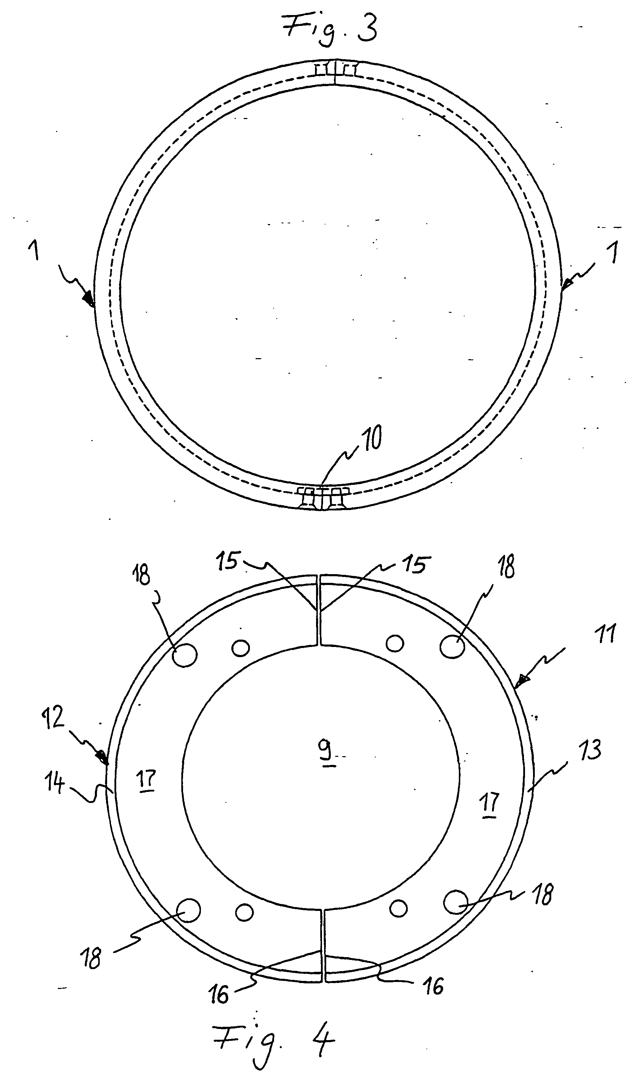

Wie in Fig. 3 gezeigt ist, sind zwei Schalensegmente 1 zu einem Ring zusammengefügt. Die beiden Schalensegmente 1 werden an den freien Segmentenden 3 und 4 jeweils über ein Verbindungselement 10 miteinander verbunden. Das Verbindungselement 10 besteht aus einer Platte, die zwei den Bohrungen 9 entsprechende Bohrungen besitzt. In der vorliegenden Ausführungsform sind die Bohrungen des Verbindungselements 10 mit Innengewinden versehen, so daß die Schrauben in das Verbindungselement eingeschraubt werden können. Es ist aber auch möglich, gewindelose Bohrungen vorzusehen. Dann werden die Schrauben mittels einer Mutter miteinander verschraubt.

Gemäß Fig. 1 ist eine dem oberen Arm 21 zugewandte Ringscheibe 9 und eine dem unteren Arm 22 zugewandte Ringscheibe 29 vorgesehen. Da beide Ringscheiben identisch sind, wird im Folgenden nur die obere Ringscheibe 9 unter Bezugnahme auf Fig. 4 näher erläutert.

Gemäß Fig. 4 sind zwei Ringscheibensegmente 11 und 12 zu einer annähernd geschlossenen Ringscheibe 9 zusammengefügt. Die beiden Ringscheibensegmente sind von oben gesehen jeweils halbkreisförmig ausgebildet. Sie sind scheibenförmig flach ausgebildet, mit einem in Umfangsrichtung ersten freien Ringsegmentende 15, einem dem ersten Ringsegmentende 15 diametral gegenüberliegenden zweiten Ringsegmentende 16, einer Ringfläche 17, einer inneren Umfangsseite und einer äußeren Umfangsseite.

In der Ringfläche 17 sind mehrere Bohrungen 18 vorgesehen, durch die (nicht dargestellte) Schraubenbolzen gesteckt werden, wenn die Ringscheibensegmente an der Drehverbindung montiert werden. In der vorliegenden Ausführungsform sind jeweils zwei Bohrungen pro Ringscheibensegment vorgesehen. Es können selbstverständlich auch mehr als zwei Bohrungen vorgesehen werden.

Wie in Fig. 4 und in Fig. 1 zu sehen ist, besitzt jedes Ringscheibensegment 11, 12 einen radial nach außen vorstehenden Vorsprung, der als Eingriffsabschnitt 13, 14 dient. Die Wandstärke eines jeden Vorsprungs ist geringer als die Wandstärke des Ringscheibensegments. In der vorliegenden Ausführungsform beträgt die Wandstärke des Vorsprungs etwa die Hälfte der Wandstärke des Ringscheibensegments. Die Abmessung des Vorsprungs ist jedoch so dimensioniert, daß er durch Eingreifen in die Eingriffsabschnitte 7, 8 der Schalensegmente 1 das Gewicht des Deckenstativs und der Geräte sicher halten könnte, falls die Drehverbindung 20 auseinanderreißen sollte. Der Vorsprung ragt radial so weit vor, daß seine radiale Dimension in etwa der radialen Dimension des Eingriffsabschnitts 7, 8 des Schalensegments 1 entspricht.

Im zusammenmontierten Zustand gemäß Fig. 1 ragt somit der Eingriffsabschnitt 7, 8 eines jeden Schalensegments 1 sowohl am oberen Rand 5 als auch am unteren Rand 6 hinter den radialen Vorsprung des Eingriffsabschnitts 13, 14 eines jeden Ringscheibensegments 11, 12.

Im Falle des Auseinanderreißens der Drehverbindung 20 wird ein Herabfallen des Deckenstativs oder von Teilen davon verhindert, da in einem solchen Fall die Eingriffsabschnitte 7, 8 der beiden Schalensegmente 1 mit den Eingriffsabschnitten 13, 14 der Ringscheiben 9 und 29 in Eingriff gelangen und die Drehverbindung zusammenhalten. Genauer gesagt, wird der obere Eingriffsabschnitt 7 vom Vorsprung der oberen Ringscheibe 9 gehalten, während der untere Eingriffsabschnitt 8 den Vorsprung der unteren Ringscheibe 29 hält.

Im folgenden wird der nachträgliche Einbau der Sicherungsvorrichtung erläutert. Schraubenbolzen, die die Drehverbindung 20 sichern, werden zunächst gelöst und herausgezogen. Anschließend werden die Ringscheibensegmente 11, 12 der oberen und unteren Ringscheiben 9 und 29 seitlich oberhalb und unterhalb der Drehverbindung 20 eingeschoben. Danach werden neue Schraubenbolzen, die um die jeweilige Dicke der Ringscheibensegmente länger sind, durch die Bohrungen 18 auf der Ringfläche 17 der Ringscheibensegmente gesteckt und anschließend wieder angezogen. Auf diese Weise sind die Ringscheibensegmente 11, 12 an der Drehverbindung 20 fixiert.

Nun werden die Schalensegmente 1 von der Seite auf die Drehverbindung 20 gesteckt und über das Verbindungselement 10 und die dazugehörigen Schrauben miteinander verschraubt. Dadurch umhüllen die Schalensegmente 1 die Drehverbindung. Die Eingriffsabschnitte 7, 8 der Schalensegmente 1 greifen dabei in die Eingriffsabschnitte 13, 14 der Ringscheibensegmente 11, 12 und sichern die Drehverbindung wie eine Klammer.

## Patentansprüche

1. Medizinische Deckenversorgungseinheit, die eine Sicherungsvorrichtung für eine vertikale Drehverbindung eines einen oberen Eingriffsabschnitt (13) aufweisenden oberen, im wesentlichen horizontal verlaufenden Arms (21) mit einem einen unteren Eingriffsabschnitt (14) aufweisenden unteren, im wesentlichen horizontal verlanfenden Arm (22) aufweist, wobei die Drechverbindung eine Nabe (23) aufweist, so daß der obere Arm (21) und der untere Arm (22) gegeneinander verdrehbar sind, wobei die Sicherungsvorrichtung mindestens zwei die Verbindung in horizontaler Richtung von außen zumindest teilweise umgreifende Schalensegmente (1) aufweist, mit einem oberen und einem unteren Rand (5, 6), an den sich jeweils ein zur Drehverbindung hin gerichteter oberer und unterer Eingriffsabschnitt (7, 8) anschließt, so daß sich bei einem Lösen der Drechverbindung der zwei Arme (21, 22) der obere Eingriffsabschnitt (7) der Schalensegmente (1) an dem am oberen Arm (21) vorgesehenen Eingriffsabschnitt (13) abstützt, während der untere Eingriffsabschnitt (8) der Schalensegmente (1) den unteren Eingriffsabschnitt (14) des unteren Arms (22) hält, wobei die jeweiligen Eingriffsabschnitte (13, 14) des oberen und unteren Arms (21,22) jeweils axial unter- bzw., oberhalb der Arme (21,22) vorgesehen sind.

2. Deckenversorgungseinheit nach Anspruch 1, **gekennzeichnet durch** eine obere und eine untere jeweils mindestens aus ersten und zweiten Ringscheibensegmenten (11 12) zusammengesetzte Ringscheibe (9), die jeweils in horizontaler Richtung von außen auf die Verbindung aufschiebbar sind, wobei im eingebauten Zustand die obere Ringscheibe (9) am oberen Arm (21) und die untere Ringscheibe (29) am unteren Arm (22) fixiert ist, wobei die oberen und unteren Eingriffsabschnitte (13, 14) jeweils an den Ringscheibensegmenten (11, 12) ausgebildet sind.

3. Deckenversorgungseinheit nach Anspruch 1 oder 2, **dadurch gekennzeichnet, daß** die Schalensegmente (1) im eingebauten Zustand miteinander verbunden sind.

4. Deckenversorgungseinheit nach einem der vorhergehenden Ansprüche, **dadurch gekennzeichnet, daß** der Eingriffsabschnitt (7, 8) des Schalensegments (1) aus einem im wesentlichen rechtwinklig vom oberen oder unteren Rand (5, 6) abgewinkelten Vorsprung ausgebildet ist.

5. Deckenversorgungseinheit nach einem der vorhergehenden Ansprüche, **dadurch gekennzeichnet, daß** der Eingriffsabschnitt (13, 14) des oberen oder unteren Verbindungsbauteils bzw. des Ringscheibensegments (11, 12) aus einem an dessen Außenumfang vorstehenden Vorsprung ausgebildet ist.

6. Deckenversorgungseinheit nach dem vorhergehenden Anspruch, **dadurch gekennzeichnet, daß** der am Außenumfang vorstehende Vorsprung abgestuft ausgebildet ist.

7. Deckenversorgungseinheit nach einem der vorhergehenden Ansprüche, **dadurch gekennzeichnet, daß** sich der Eingriffsabschnitt (7, 8) des Schalensegments (1) über den gesamten oberen oder unteren Rand (5, 6) erstreckt.

8. Deckenversorgungseinheit nach einem der vorhergehenden Ansprüche, **dadurch gekennzeichnet, daß** sich der Eingriffsabschnitt (13, 14) des oberen oder unteren Verbindungsbauteils bzw. des Ringscheibensegments (11, 12) über den gesamten Außenumfang erstreckt.

## Claims

1. Ceiling-mounted medical supply-unit, comprising a locking device for a vertical pivotal-connection of a substantially horizontally extending upper arm (21) comprising an upper engaging section (13), with a substantially horizontally extending lower arm (22) comprising a lower engaging section (14), wherein the pivotal-connection comprises a hub (23) such that the upper arm (21) and the lower arm (22) are revolvable against each other, whereby the locking device comprises at least two shell segments (1) that reach, at least in part, around the connection from the outside and in horizontal direction, with the shell segments (1) comprising an upper and a lower edge (5, 6) adjacent to each of which an upper and a lower engaging section (7, 8) facing the pivotal-connection is provided so that, should the pivotal-connection of the two arms (21, 22) come apart, the upper engaging section (7) of the shell segments (1) is supported against the upper engaging section (13) provided at the upper arm (21), while the lower engaging section (8) of the shell segments (1) holds the lower engaging section (14) of the lower arm (22), wherein the respective engaging sections (13, 14) of the upper and lower arms (21, 22) are provided axially below or above the arms (21, 22), respectively.

2. Ceiling-mounted supply-unit according to Claim 1, **characterized by** an upper and a lower washer (9) each being assembled of at least first and second washer segments (11, 12), whereby the washers (9) can each be pushed onto the connection from the outside and in horizontal direction, whereby, when installed, the upper washer (9) is fixed to the upper arm (21) and the lower washer (29) to the lower arm (22), whereby the upper and lower engaging sections (13, 14) are each formed on the respective washer segments (11, 12).

3. Ceiling-mounted supply-unit according to Claim 1 or 2, **characterized in that** the shell segments (1) are connected to each other in the installed state.

4. Ceiling-mounted supply-unit according to one of the preceding claims, **characterized in that** the engaging section (7, 8) of the shell segment (1) is formed by a projection that is bent from the upper or lower edge (5, 6) at an essentially right angle.

5. Ceiling-mounted supply-unit according to one of the preceding claims, **characterized in that** the engaging section (13, 14) of the upper or lower connection component or washer segment (11, 12) is formed by a projection protruding from the outer perimeter of said washer segment.

6. Ceiling-mounted supply-unit according to the preceding claim, **characterized in that** the projection protruding from the outer perimeter is stepped.

7. Ceiling-mounted supply-unit according to one of the preceding claims, **characterized in that** the engaging section (7, 8) of the shell segment (1) extends along the entire upper or lower edge (5, 6).

8. Ceiling-mounted supply-unit according to one of the preceding claims, **characterized in that** the engaging section (13, 14) of the upper or lower connection component or washer segment (11, 12) extends along the entire outer perimeter.

## Revendications

1. Unité d'alimentation médicale en plafond, présentant un dispositif de sécurité pour une liaison en plafond verticale d'un bras supérieur (21) s'étendant sensiblement horizontalement présentant un tronçon de mise en prise supérieur (13) avec un bras inférieur (22) s'étendant sensiblement horizontalement présentant un tronçon de mise en prise (14), où la liaison rotative présente un moyeu (23), de manière que le bras supérieur (21) et le bras inférieur (22) soient susceptibles de tourner l'un par rapport à l'autre, où le dispositif de sécurité présente au moins deux segments de coquille (1) entourant au moins partiellement depuis l'extérieur la liaison en direction horizontale, avec un bord supérieur et un bord inférieur (5,6) à chacun desquels se raccorde un tronçon de mise en prise supérieur et inférieur (7,8) orienté vers la liaison rotative, de manière que, dans le cas d'une désolidarisation de la liaison rotative des deux bras (21, 22), le tronçon de mise en prise supérieur (7) des segments de coquille (1) prenne appui sur le tronçon de mise en prise (13) prévu sur le bras supérieur (21), tandis que le tronçon de mise en prise inférieur (8) des segments de coquille (1) maintient le tronçon de mise en prise inférieur (14) du bras inférieur (22), sachant que les tronçons de mise en prise (13, 14) respectifs du bras supérieur et inférieur (21, 22) sont chacun prévus axialement au-dessous ou au-dessus des bras (21, 22).

2. Unité d'alimentation en plafond selon la revendication 1, **caractérisée par** un disque annulaire supérieur et un disque inférieur (9, 29), chacun composé d'au moins des premiers et deuxièmes segments **caractérisés par** des disque annulaire (11,12), chacun susceptible d'être enfiché en direction horizontale depuis l'extérieur sur la liaison sachant que, à l'état intégré, le disque annulaire supérieur (9) est fixé sur le bras supérieur (21) et le disque annulaire inférieur (29) est fixé sur le bras inférieur (22), les tronçons de mise en prise supérieur (13, 14) étant chacun réalisés sur les segments de disque annulaire (11, 12).

3. Unité d'alimentation en plafond selon la revendication 1 ou 2, **caractérisée en ce que** les segments de coquille (1) sont reliés ensemble à l'état monté.

4. Unité d'alimentation en plafond selon l'une des revendications précédentes, **caractérisée en ce que** le tronçon de mise en prise (7, 8) du segment de coquille (1) est réalisé à partir d'une saillie, coudée sensiblement à angle droit depuis le bord supérieur ou inférieur (5, 6).

5. Unité d'alimentation en plafond selon l'une des revendications précédentes, **caractérisée en ce que** le tronçon de mise en prise (13,14) du composant de liaison supérieur ou inférieur ou du segment de disque annulaire (11, 12) est réalisé à partir d'une saillie se projetant depuis sa périphérie extérieure.

6. Unité d'alimentation en plafond selon la revendication précédente, **caractérisée en ce que** la saillie se projetant sur la périphérie extérieure est échelonnée.

7. Unité d'alimentation en plafond selon l'une des revendications précédentes, **caractérisée en ce que** le tronçon de mise en prise (7, 8) du segment de coquille (1) s'étend sur la totalité du bord supérieur ou inférieur (5, 6) .

8. Unité d'alimentation en plafond selon l'une des revendications précédentes, **caractérisée en ce que** le tronçon de mise en prise (13, 14) du composant supérieur ou inférieur ou du segment de disque annulaire (11, 12) s'étend sur la totalité de la périphérie extérieure.
